(19) Europäisches Patentamt / European Patent Office / Office européen des brevets

(11) **EP 2 436 534 B1**

(12) **EUROPEAN PATENT SPECIFICATION**

(45) Date of publication and mention
of the grant of the patent:
**04.06.2014 Bulletin 2014/23**

(21) Application number: **10780305.8**

(22) Date of filing: **28.05.2010**

(51) Int Cl.:
***B60C 11/00*** *(2006.01)*　　　***B60C 11/03*** *(2006.01)*
***B60C 11/04*** *(2006.01)*　　　***B60C 19/00*** *(2006.01)*

(86) International application number:
**PCT/JP2010/003615**

(87) International publication number:
**WO 2010/137345 (02.12.2010 Gazette 2010/48)**

(54) **A METHOD OF DESIGNING A RESONATOR AND PNEUMATIC TIRE HAVING THE RESONATOR**

VERFAHREN ZUM ENTWURF EINES RESONATORS UND LUFTREIFEN MIT DEM RESONATOR

PROCÉDÉ DE CONCEPTION D'UN RÉSONATEUR ET PNEUMATIQUE COMPRENANT LE RÉSONATEUR

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **28.05.2009 JP 2009129469**

(43) Date of publication of application:
**04.04.2012 Bulletin 2012/14**

(73) Proprietor: **Bridgestone Corporation
Tokyo 104-8340 (JP)**

(72) Inventors:
• **WAKI, Yoshiyuki
c/o BRIDGESTONE CORPORATION
Kodaira-shi
Tokyo 187-8531 (JP)**
• **FUJIWARA, Shu
c/o BRIDGESTONE CORPORATION
Kodaira-shi
Tokyo 187-8531 (JP)**
• **SAGUCHI, Takanari
c/o BRIDGESTONE CORPORATION
Kodaira-shi
Tokyo 187-8531 (JP)**

(74) Representative: **Waldren, Robin Michael et al
Marks & Clerk LLP
90 Long Acre
London
WC2E 9RA (GB)**

(56) References cited:
**WO-A1-2008/102780　　　JP-A- 2009 029 354
JP-A- 2009 090 824**

EP 2 436 534 B1

**Description**

TECHNICAL FIELD

The present invention relates to a pneumatic tire having at least one circumferential groove extending in a tire circumferential direction and a plurality of resonators configured to reduce a noise generated by resonance in a tubular space defined by the circumferential groove and a contact surface of the road. The present invention intends to improve quietness by reducing the noise generated from the pneumatic tire, braking performance, drainage performance and steering stability on a wet road surface.

BACKGROUND ART

In recent years, the noise of vehicles attributes to loaded rolling of the pneumatic tire has been increased in accordance with enhancement of quietness of vehicles, whose reduction has been required. Above all, the noise of the pneumatic tire at a high frequency, particularly around 1000 Hz, is a main cause of a vehicle exterior noise. It has been required to take measures to reduce it in terms of an environmental problem.

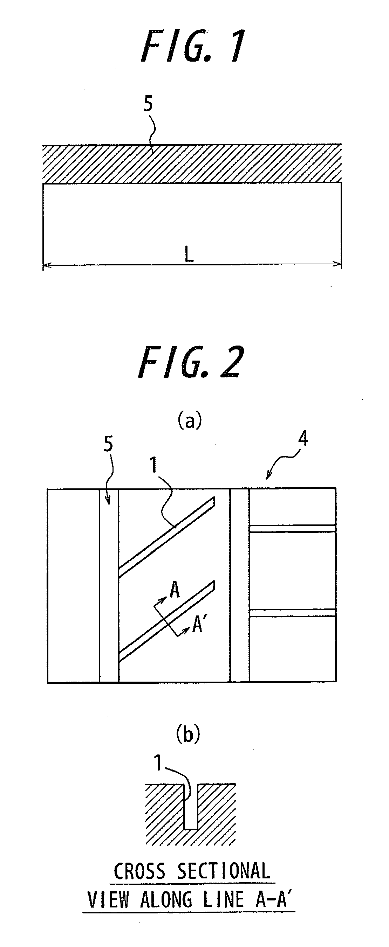

The noise of the tire around 1000 Hz is generated mainly by air column resonance. The air column resonance is a noise generated by resonance in the tubular space defined by the circumferential groove continuously extending in a circumferential direction of a tread and a road surface. The air column noise is often measured at about 800-1200 Hz for common vehicles and, having a sound pressure level with a high peak and a wide frequency band, accounts for a large share of the noises generated from the pneumatic tire. As shown in FIG. 1, when the circumferential groove positioned within a contact patch has a length L under a normal condition of an inner pressure and a weight bearing, a resonance frequency (Hz) may be obtained from

[Formula 1]

$$f_n = \frac{nc}{2L} \qquad (n = 1, 2, \cdots)$$

Here, "n" corresponds to an n-th order resonance, whereas "c" denotes the speed of sound through the air, which is generally defined 343.7 (m/s) under a condition of an atmosphere pressure 1 atm and the temperature at 20 degrees Celsius. Among infinite resonance orders as shown in Formula 1, primary resonance (n=1) forms a major peak of the noise and has the frequency often measured at about 800-1200 Hz for common vehicles. That is, a problematic frequency of the air column resonance is expressed by

[Formula 2]

$$f = \frac{c}{2L}$$

In addition, since a human has a particularly acute sense of hearing at the frequency band around 1000 Hz (A weighting), it is effective to reduce such an air column resonance in terms of improvement of quietness for a driver during driving, as well.

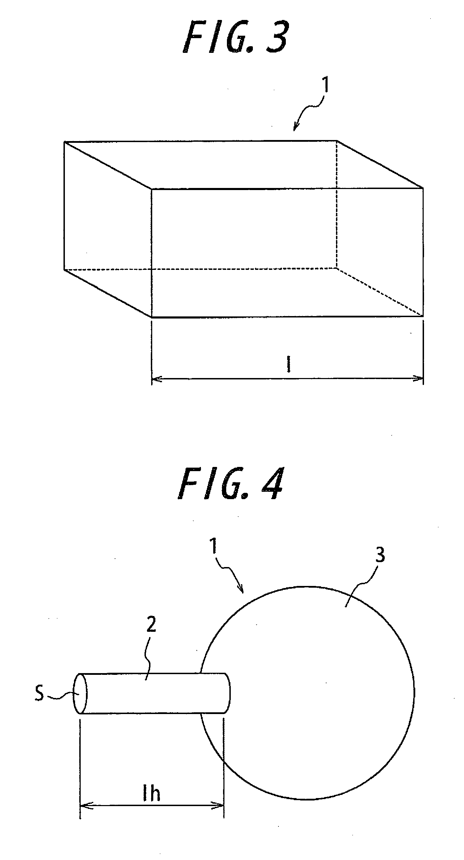

In order to reduce the air column resonance, it has been popularly implemented to reduce the number of, and a capacity of, circumferential grooves. In addition, as shown in FIG. 2, there has been suggested to reduce the air column resonance by providing a long groove (side branch resonator) having only one end opening to the circumferential groove while the other end is terminated within a land area and using antiresonance within the resonator, as disclosed in Patent Document 1. However, it has been desired to improve the drainage performance of the pneumatic tire having the circumferential groove with a reduced capacity. In addition, since the pneumatic tire described in Patent Document 1 needs long transverse grooves, it has been desired to improve a degree of freedom in designing a tread pattern and, simultaneously, to retain rigidity of the land area and improve the steering stability. When 1 denotes the length of the groove of the resonator as shown in FIG. 3, the resonance frequency of the side branch resonator is expressed by

[Formula 3]

$$f_n = \frac{2n-1}{4}\frac{c}{l}$$

It is possible to make the resonator function by conforming the frequency particularly when n=1 is satisfied

[Formula 4]

$$f = \frac{c}{4l}$$

to the frequency expressed by Formula 2.

In order to take measurements as described above, there has been suggested a technique to dispose a Helmholtz resonator having a branch groove branched from the circumferential groove of the tire and an air chamber communicating with the branch groove and having a cross section perpendicular to its extending direction greater than that of the branch groove, in order to reduce the air column resonance using the antiresonance by the resonator, as described in Patent Document 2 (see FIG. 4). This enables to retain a sufficient capacity of the circumferential groove and improve the drainage performance, as well as to improve the degree of freedom in designing the tread pattern, in comparison to the pneumatic tire described in Patent Document 1. A frequency of the Helmholtz resonator is expressed by

[Formula 5]

$$f = \frac{c}{2\pi}\sqrt{\frac{S}{l_h V}}$$

Here, S, $l_h$ and V denote a cross-section area of a fine tube, a length of the fine tube and a capacity of the air chamber, respectively. Although the frequency of a simple resonator can be estimated with Formula 4 and Formula 5, it is desired to consider that a common shape of the resonator is stepped, as disclosed in Patent Document 3 and shown in FIG. 5.

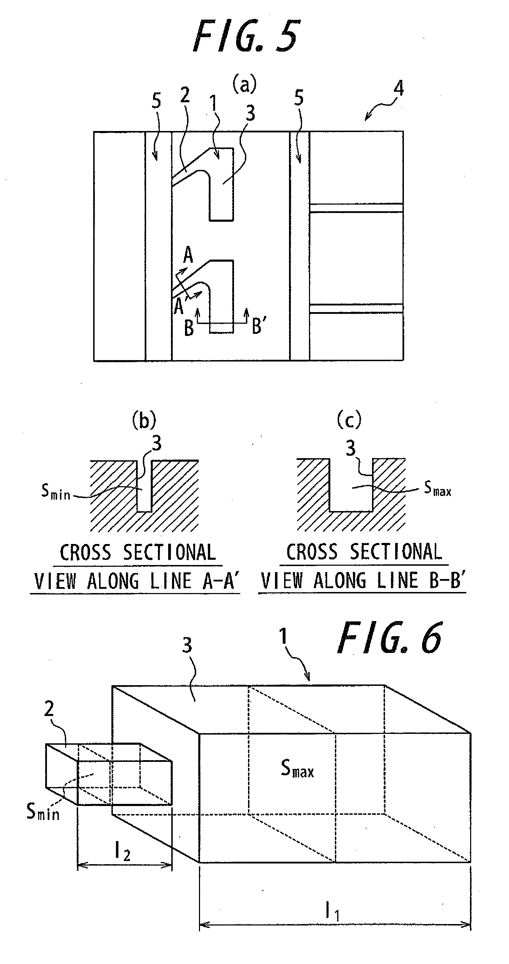

A standard resonance frequency (n=1) of the stepped resonator schematically shown in FIG. 6 is expressed by f satisfying the following formula:

[Formula 6]

$$\tan\left(\frac{2\pi f l_1}{c}\right)\tan\left(\frac{2\pi f l_2}{c}\right) - \frac{S_{min}}{S_{max}} = 0$$

Here, $l_1$ and $l_2$ denote a length of each of the tubes, whereas $S_{min}$ and $S_{max}$ denote a cross-section area of each of the tubes. It is possible to make the resonator fully exert its effect and efficiently reduce the noise by conforming the standard resonance frequency of the resonator obtained from Formula 6 to the frequency of the air column resonance (Formula 2), or by designing the standard resonance frequency close to the frequency of the air column resonance.

RELATED ART DOCUMENTS

PATENT DOCUMENTS

Patent Document 1; booklet of WO2004/103737
Patent Document 2: booklet of WO2007/114430
Patent Document 3: Japanese Patent Application Laid-Open No. 2008-179289
Patent Document 4: Japanese Patent Application Laid-Open No. 2007-237751
Patent Document 5: Japanese Patent Application Laid-Open No. 2007-237752

## SUMMARY OF INVENTION

### TECHNICAL PROBLEM

Although usable in general designing, Formula 6 is transcendental and thus cannot provide an analytical solution. Accordingly, it takes multiple trial and error processes at the stage of designing of the resonator, which is inefficient as it consumes time and effort. In addition, it has been unknown how stably the resonator functions in association with a variation of a length of the circumferential groove in contact with the ground, until conducting a test to run the tire having the resonator. For commonly complicated shapes, it is possible to obtain the resonance frequency of the resonator using numerical calculation, as disclosed in Patent Document 4 and Patent Document 5. However, in terms of the issue of manhour to create a calculation model, it has been desired to provide a method of designing the resonator in a simpler manner.

Accordingly, it is an object of the present invention to provide a method of designing the resonator more simply by deriving a non-transcendental model formula. In addition, it is a further object of the present invention to provide the pneumatic tire having the resonator designed by such a method.

### SOLUTION TO PROBLEM

According to the present invention, in order to achieve the above problems, a method of designing a resonator of a pneumatic tire having at least one circumferential groove extending in a tire circumferential direction on a tread and the resonator configured to reduce a noise generated by resonance in tubular spaces defined by the circumferential groove and a road surface, the resonator having a branch groove branched from the circumferential groove and an air chamber communicating with the branch groove and having a cross section perpendicular to its extending direction greater than that of the branch groove, characterized in that a portion $l_1$ of a minimum cross section $S_{min}$ of the branch groove from an opening to the circumferential groove satisfies $l_1/L<1/\pi$ and $l_2/L=(1-l_1)/L<1/\pi$, where 1 is a length of the groove of the resonator, L is a length of the circumferential groove within a contact patch, $S_{min}$ is a minimum portion of the cross section of the branch groove, and $S_{max}$ is a maximum portion of the cross section of the air chamber, and that a relation between 1/L and $S_{min}/S_{max}$ to determine a shape of the resonator satisfies the following equations:

[Formula 7]

$$\frac{S_{min}}{S_{max}} \leq \frac{\pi^2}{2(0.75)^2}\left(\frac{l}{L}\right)^2$$

and

[Formula 8]

$$\frac{S_{min}}{S_{max}} \geq \frac{\pi^2}{2(1.25)^2}\left\{\left(\frac{l}{L}\right)^2 - \frac{2}{\pi^2}\right\}$$

Here, the "circumferential groove" includes not only a groove linearly extending in the tire circumferential direction but also a groove extending in a zigzag or waved manner encircling the entire tire in the tire circumferential direction. The "contact patch" means an area of the tread in contact with the road surface when, under a standard air pressure (atmospheric pressure: 1 atm) defined by JATMA, ETRTO and TRA, the pneumatic tire is rotated at ordinary temperature (generally 20 degrees Celsius) under a usual load. In addition, $l(l_1,l_2)$, L, $S_{min}$, $S_{max}$ described above are under the condition that, under the standard air pressure (atmospheric pressure: 1 atm) defined by JATMA, ETRTO and TRA, the usual load is applied to the pneumatic tire at ordinary temperature (generally 20 degrees Celsius).

Further, a pneumatic tire according to the present invention having at least one circumferential groove extending in a tire circumferential direction on a tread and a resonator configured to reduce a noise generated by resonance in tubular spaces defined by the circumferential groove and a road surface, the resonator having a branch groove branched from the circumferential groove and an air chamber communicating with the branch groove and having a cross section perpendicular to its length greater than that of the branch groove, characterized in that a portion $l_1$ of a minimum cross section $S_{min}$ of the branch groove from an opening to the circumferential groove satisfies $l_1/L<1/\pi$ and $l_2/L=(1-l_1)/L<1/\pi$, where 1 is a length of the groove of the resonator, L is a length of the circumferential groove within a contact patch, $S_{min}$ is a minimum portion of the cross section of the branch groove, and $S_{max}$ is a maximum portion of the cross section of the air chamber, and that a relation between 1/L and $S_{min}/S_{max}$ to determine a shape of the resonator satisfies the following equations:

$$\text{[Formula 9]}$$

$$\frac{S_{min}}{S_{max}} \leq \frac{\pi^2}{2(0.75)^2}\left(\frac{l}{L}\right)^2$$

and

$$\text{[Formula 10]}$$

$$\frac{S_{min}}{S_{max}} \geq \frac{\pi^2}{2(1.25)^2}\left\{\left(\frac{l}{L}\right)^2 - \frac{2}{\pi^2}\right\}$$

EFFECT OF THE INVENTION

According to the present invention, it is possible to provide a method of designing the resonator in a simpler manner by deriving a non-transcendental model formula, as well as the pneumatic tire having the resonator designed by such a method.

BRIEF DESCRIPTION OF DRAWINGS

FIG. 1 is a diagram schematically illustrating a circumferential groove on a tread;
FIG. 2(a) is a diagram illustrating a development view of a part of the tread having a side branch resonator, and FIG. 2(b) is a diagram illustrating a cross-sectional view taken along line A-A' of the development view in FIG. 2(a);
FIG. 3 is a diagram schematically illustrating the side branch resonator;
FIG. 4 is a diagram schematically illustrating a Helmholtz resonator;
FIG. 5(a) is a diagram illustrating a development view of a part of the tread having a stepped resonator, while FIG. 5(b) is a diagram illustrating a cross-sectional view taken along line A-A' of the development view in FIG. 5(a), and FIG. 5(c) is a diagram illustrating a cross-sectional view taken along line B-B' of the development view in FIG. 5(a);
FIG. 6 is a diagram schematically illustrating the stepped resonator;
FIG. 7 is a diagram illustrating an optimal range of resonance of the resonator provided on a pneumatic tire according to a designing method of the present invention;
FIG. 8(a) and (b) are diagrams illustrating development views of a part of the treads of exemplary conventional pneumatic tires; and
FIG. 9(a)-(f) are diagrams illustrating development views of a part of the treads of the pneumatic tires provided with the resonators according to the designing method of the present invention.

DESCRIPTION OF EMBODIMENT

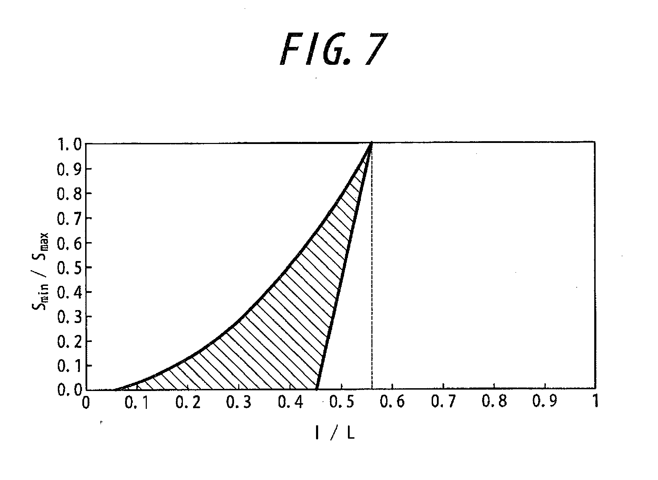

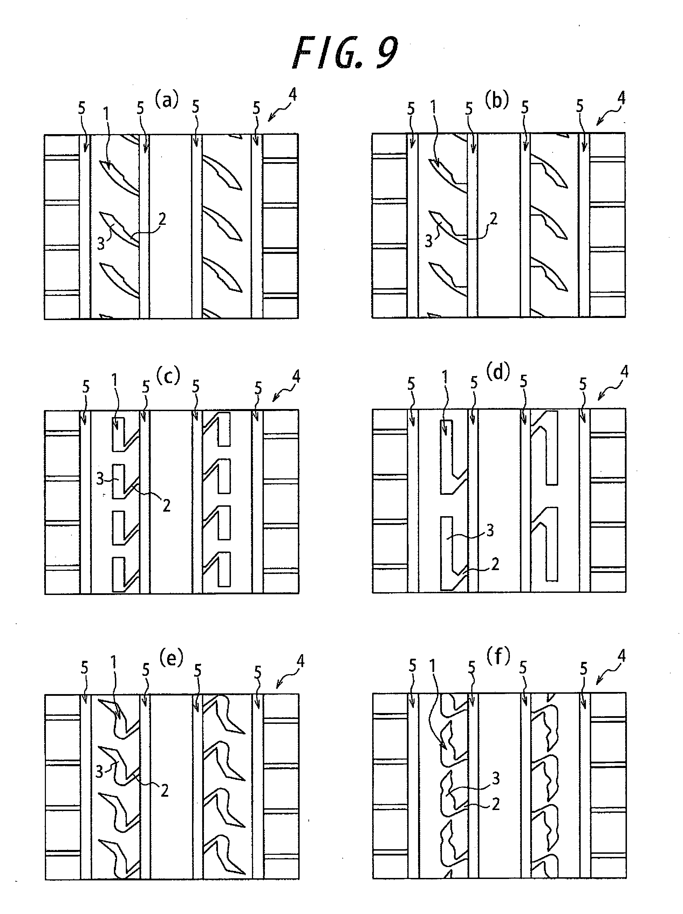

An embodiment of the present invention will be described with reference to the accompanying drawings. FIG. 7 a diagram illustrating an optimal range (shaded area) of resonance of a resonator provided to a pneumatic tire (hereinafter, referred to simply as "tire") by a designing method according to the present invention. FIG. 9(a)-(f) are diagrams illustrating development views of a part of a tread of the pneumatic tire provided with the resonator designed by the designing method according to the present invention.

The designing method of the resonator according to the present invention relates to a method of designing a resonator 1 for the tire having at least one circumferential groove 5 extending in a tire circumferential direction on a tread 4 and the resonator 1 configured to reduce a noise generated by resonance in a tubular space defined by the circumferential groove 5 and a road surface, where the resonator 1 has a branch groove 2 branched from the circumferential groove 5 and an air chamber 3 communicating with the branch groove 2 and having a cross section perpendicular to its extending direction greater than that of the branch groove, as shown in FIG. 9(a). According to the designing method, the resonator 1 is designed such that a portion $l_1$ of a minimum cross section $S_{min}$ of the branch groove 2 from an opening to the circumferential groove 5 satisfies $l_1/L < 1/\pi$ and $l_2/L = (1-l_1)/L < 1/\pi$, where 1 is a length of the groove of the resonator, L is a length the circumferential groove 5 within a contact patch, $S_{min}$ is a minimum portion of the cross section of the branch groove 2, and $S_{max}$ is a maximum portion of the cross section of the air chamber 3, and that a relation between 1/L and $S_{min}/S_{max}$ to determine a shape of the resonator satisfies the following equations:

[Formula 11]

$$\frac{S_{min}}{S_{max}} \leq \frac{\pi^2}{2(0.75)^2}\left(\frac{l}{L}\right)^2$$

and

[Formula 12]

$$\frac{S_{min}}{S_{max}} \geq \frac{\pi^2}{2(1.25)^2}\left\{\left(\frac{l}{L}\right)^2 - \frac{2}{\pi^2}\right\}$$

The circumferential groove 5 may take the shape of not only a straight line but also a zigzag shape, a waved shape or the like.

The inventors found out that, in using the resonator 1 having the branch groove 2 and the air chamber 3, it is preferable to provide an area with a small cross section in the vicinity of an opening to the circumferential groove 5, as the area with the small cross section promises attenuation of sound energy, as a result. Additionally, an area particularly in the vicinity of an end along an axis virtually determines a size of the resonator 1. Such a size has the same effect when retained at any position of the resonator 1 between a position of $S_{min}$ and a part in the vicinity of the end. A representative size in the area is $S_{max}$, which is a maximum portion of the cross section of the resonator 1.

In light of the above findings, if a frequency obtained from Formula 2 is assigned to Formula 6, in consideration of a resonance frequency of the resonator 1, which is of stepped type as is the most common, corresponding to the frequency of air column resonance, the following formula is obtained:

[Formula 13]

$$\tan\left(\frac{\pi l_1}{L}\right)\tan\left(\frac{\pi l_2}{L}\right) = \frac{S_{min}}{S_{max}}$$

If $\pi l_1//L$, $\pi l_2/L$ are sufficiently smaller than 1, Formula 13 is converted into

[Formula 14]

$$\frac{\pi^2 l_1 l_2}{L^2} = \frac{S_{min}}{S_{max}}$$

by MacLaurin expansion, which enables to derive the following formula:

[Formula 15]

$$\frac{S_{min}}{S_{max}} = \frac{\pi^2}{2}\left\{\left(\frac{l}{L}\right)^2 - \alpha\right\}, \quad l = l_1 + l_2, \quad \alpha = \frac{l_1^2 + l_2^2}{L^2}$$

Here, it is necessary for the resonator designed by the designing method according to the present invention on the assumption that $\pi l_1/L$, $\pi l_2/L$ are sufficiently smaller than 1, to satisfy especially

[Formula 16]

$$l_1/L < 1/\pi, \quad l_2/L < 1/\pi$$

In addition, it is generally not necessary for a basic frequency and the frequency of the air column resonance of the resonator 1 to strictly correspond to each other. A sufficient effect can be promised even if their frequency bands differ from each other by approximately 20-30 %. That is, if Formula 2 expresses

[Formula 17]

$$f = \beta\frac{c}{2L}$$

$\beta=0.75$ and $\beta=1.25$ limit of designing for a low frequency and a high frequency, respectively, in using the designing method according to the present invention.
Namely, Formula 15 is amended to

[Formula 18]

$$\frac{S_{min}}{S_{max}} = \frac{\pi^2}{2\beta^2}\left\{\left(\frac{l}{L}\right)^2 - \alpha\right\}, \quad l = l_1 + l_2, \quad \alpha = \frac{l_1^2 + l_2^2}{L^2}$$

That is, a relation between l/L, which is a ratio of a length of the axis of the resonator 1 and a length of a main groove, and $S_{min}/S_{max}$, which is a ratio of cross sections of the resonator, corresponds to the shaded area in FIG. 7. Here, in accordance with the above limit of the designing method of the present invention, a formula defining an upper limit to determine the shaded area is:

[Formula 19]

$$\frac{S_{min}}{S_{max}} = \frac{\pi^2}{2(0.75)^2}\left(\frac{l}{L}\right)^2, \quad (\alpha = 0, \beta = 0.75)$$

whereas a formula defining a lower limit is:

[Formula 20]

$$\frac{S_{\min}}{S_{\max}} = \frac{\pi^2}{2(1.25)^2}\left\{\left(\frac{l}{L}\right)^2 - \frac{2}{\pi^2}\right\}, \quad \left(\alpha = 2/\pi^2, \beta = 1.25\right)$$

A range defined by the designing method according to the present invention has l/L=0.562 and $S_{\min}/S_{\max}$=0.995 as an upper limit. Preferably, the resonator is designed in the vicinity of a center of the shaded area (optimal area) in FIG. 7 defined by Formula 7 and Formula 8, as it enables a stable reduction in the noise in accordance with variations of an inner pressure, a load and a road surface. In addition, since the formula is non-transcendent in designing the resonator according to the present invention, it allows for an easy determination on factors of a shape of the resonator and easy designing of a suitable resonator, thereby enabling to provide the tire capable of effectively reducing the air column resonance.

Although not shown, the resonators 1 are preferably disposed at a plurality of intervals, that is, at variable intervals, in the tire circumferential direction. If all of the resonators 1 are disposed at identical intervals in the tire circumferential direction, pitch noises of the resonators 1 adj acent to one another in the tire circumferential direction resonate and amplified, thus generating the noise.

In addition, it is also preferred that the intervals to dispose the resonator 1 are shorter than a length of the contact patch. If the intervals to dispose of the resonator 1 are longer than the length of the contact patch, the resonator 1 does not contact with the road surface when the tire is in contact with the road surface, which possibly prevents effective reduction in the air column resonance.

Moreover, in consideration of rigidity and drainage performance of the land area of the tire provided with the resonator 1 designed by the above method, it is preferred to provide the tire with at least one sipe to connect the resonator 1 and the circumferential groove 5. Here, the "sipe" is a fine groove having an area with a cross section reduced by 90 % or more when contacting with the ground, and not included in calculation of 1 and S. At this time, the sipe is preferably 2 mm or less in width.

The above description is only a part of the embodiment of the present invention. It is possible to combine the above configurations together or amend them in various manners, without departing from the spirit and scope of the invention.

**Example**

Next, conventional tires (Exemplary conventional tires 1 and 2) having the resonators according to conventional arts and tires with the sipes designed by the designing method according to the present invention (Example tires 1-6) were manufactured as sample radial tires with a tire size 225/45R17 for automobiles and performances thereof were evaluated. The following is a description of the evaluation.

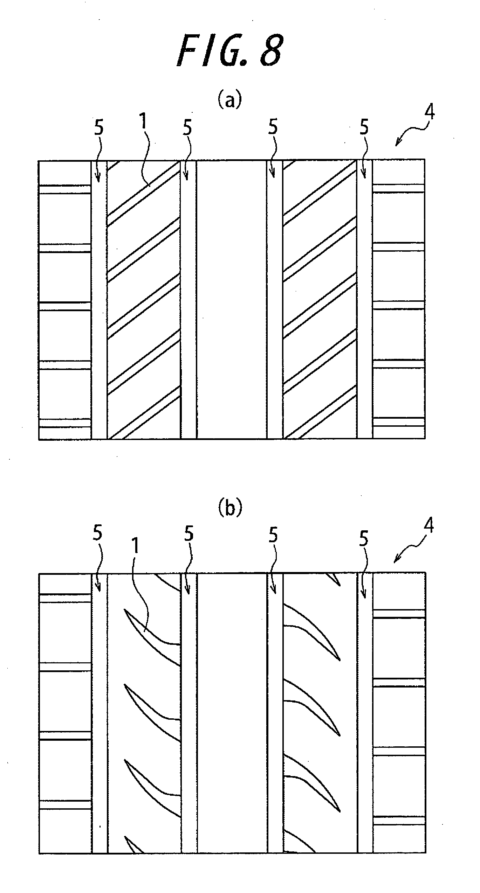

The Exemplary conventional tires 1 and 2 had tread patterns shown in FIG. 8(a) and FIG. 8(b), respectively, and provided with the circumferential groove and the resonator opening to the circumferential groove according to the conventional arts. In contrast, Example tires 1-6 had tread patterns shown in FIG. 9(a)-(f), respectively, and provided with the circumferential groove and the resonator designed by the designing method according to the present invention. All of the resonators were 6.5 mm in depth and each tire had a specification as shown in Table 1.

[Table 1]

| | Resonator Terminates within Land Area | 1/L | Smin/Smax | Noise Reduction Effect |
|---|---|---|---|---|
| Exemplary Conventional Tire 1 | × | 0.33 | 1 | - |
| Exemplary Conventional Tire 2 | ○ | 0.29 | - | +0.8dB |
| Example Tire 1 | ○ | 0.30 | 0.28 | -1.2dB |
| Example Tire 2 | ○ | 0.30 | 0.15 | -2.3dB |
| Example Tire 3 | ○ | 0.31 | 0.08 | -2.1dB |
| Example Tire 4 | ○ | 0.47 | 0.64 | -2.4dB |

(continued)

|  | Resonator Terminates within Land Area | 1/L | Smin/Smax | Noise Reduction Effect |
|---|---|---|---|---|
| Example Tire 5 | ○ | 0.39 | 0.15 | -1,7dB |
| Example Tire 6 | ○ | 0.22 | 0.10 | -1.7dB |

Each of the sample tires was mounted on a rim of 7.5 J in size to obtain a tire/wheel assembly and rotated on an indoor drum testing machine at a speed of 80 km/h under a condition of air pressure 210 kPa (relative pressure) and a load of 4.0 kN, in order to measure a noise at a side of the tire under a condition defined by JASO C606. Then, Partial Over All in a 1/3-octave band with center frequencies of 800-1000-1250 Hz was calculated to evaluate the air column resonance. With regard to the evaluation of the air column resonance, a reduction effect of the air column resonance was evaluated by calculating reduction/increase of a volume of the noise generated from the Exemplary conventional tire 1 as a relative value. Results of the evaluation are shown in Table 1.

As can be seen in Table 1, the air column resonance of Exemplary tires 1-6 is reduced in comparison to the conventional tires 1 and 2.

INDUSTRIAL APPLICABILITY

As described above, it is possible to provide a designing method of designing the resonator more easily while retaining a good appearance and the degree of freedom in designing by deriving a non-transcendental model formula. It is also possible to provide the pneumatic tire having the resonator designed by this method.

REFERENCE SIGNS LIST

1    resonator
2    branch groove
3    air chamber
4    tread
5    circumferential groove

**Claims**

1.  A method of designing a resonator of a pneumatic tire having at least one circumferential groove extending in a tire circumferential direction on a tread and the resonator configured to reduce a noise generated by resonance in tubular spaces defined by the circumferential groove and a road surface, the resonator having a branch groove branched from the circumferential groove and an air chamber communicating with the branch groove and having a cross section perpendicular to its extending direction greater than that of the branch groove, **characterized in that** a portion $l_1$ of a minimum cross section $S_{min}$ of the branch groove from an opening to the circumferential groove satisfies $l_1/L<1/\pi$ and $l_2/L=(1-l_1)/L<1/\pi$, where 1 is a length of the groove of the resonator, L is a length of the circumferential groove within a contact patch, $S_{min}$ is a minimum portion of the cross section of the branch groove, and $S_{max}$ is a maximum portion of the cross section of the air chamber, and a relation between 1/L and $S_{min}/S_{max}$ to determine a shape of the resonator satisfies the following equations:

$$\frac{S_{min}}{S_{max}} \leq \frac{\pi^2}{2(0.75)^2}\left(\frac{l}{L}\right)^2$$

and

$$\frac{S_{\min}}{S_{\max}} \geq \frac{\pi^2}{2(1.25)^2}\left\{\left(\frac{l}{L}\right)^2 - \frac{2}{\pi^2}\right\}$$

2. A pneumatic tire having at least one circumferential groove extending in a tire circumferential direction on a tread and a resonator configured to reduce a noise generated by resonance in tubular spaces defined by the circumferential groove and a road surface, the resonator having a branch groove branched from the circumferential groove and an air chamber communicating with the branch groove and having a cross section perpendicular to its extending direction greater than that of the branch groove, **characterized in that**
a portion $l_1$ of a minimum cross section $S_{\min}$ of the branch groove from an opening to the circumferential groove satisfies $l_1/L<1/\pi$ and $l_2/L<(1-l_1)/L<1/\pi$, where 1 is a length of the groove of the resonator, L is a length of the circumferential groove within a contact patch, $S_{\min}$ is a minimum portion of the cross section of the branch groove, and $S_{\max}$ is a maximum portion of the cross section of the air chamber, and a relation between $l/L$ and $S_{\min}/S_{\max}$ to determine a shape of the resonator satisfies the following equations:

$$\frac{S_{\min}}{S_{\max}} \leq \frac{\pi^2}{2(0.75)^2}\left(\frac{l}{L}\right)^2$$

and

$$\frac{S_{\min}}{S_{\max}} \geq \frac{\pi^2}{2(1.25)^2}\left\{\left(\frac{l}{L}\right)^2 - \frac{2}{\pi^2}\right\}$$

**Patentansprüche**

1. Verfahren für das Entwerfen eines Resonators eines Luftreifens, der mindestens eine Umfangsrille aufweist, die sich in einer Reifenumfangsrichtung in einer Lauffläche erstreckt, und wobei der Resonator ausgebildet ist, um ein Geräusch zu verringern, das durch die Resonanz in den rohrförmigen Räumen erzeugt wird, die durch die Umfangsrille und eine Straßendecke definiert werden, wobei der Resonator eine Abzweigrille, die von der Umfangsrille abzweigt, und eine Luftkammer aufweist, die mit der Abzweigrille verbunden ist, und einen Querschnitt senkrecht zu der Richtung, in der er sich erstreckt, aufweist, der größer ist als der der Abzweigrille, **dadurch gekennzeichnet, dass**
ein Abschnitt $l_1$ mit einem minimalen Querschnitt $S_{\min}$ der Abzweigrille von einer Öffnung zur Umfangsrille $l_1/L<1/\pi$ und $l_2/L = (1-l_1)/L<1/\pi$ erfüllt, worin sind: I eine Länge der Rille des Resonators; L eine Länge der Umfangsrille innerhalb einer Reifenaufstandsfläche; $S_{\min}$ ein minimaler Abschnitt des Querschnittes der Abzweigrille; und $S_{\max}$ ein maximaler Abschnitt des Querschnittes der Luftkammer, und wobei eine Beziehung zwischen $l/L$ und $S_{\min}/S_{\max}$, um eine Form des Resonators zu ermitteln, die folgenden Gleichungen erfüllt:

$$\frac{S_{\min}}{S_{\max}} \leq \frac{\pi^2}{2(0{,}75)^2}\left(\frac{l}{L}\right)^2$$

und

$$\frac{S_{\min}}{S_{\max}} \geq \frac{\pi^2}{2(1{,}25)^2}\left\{\left(\frac{l}{L}\right)^2 - \frac{2}{\pi^2}\right\}$$

2. Luftreifen, der mindestens eine Umfangsrille, die sich in einer Reifenumfangsrichtung in einer Lauffläche erstreckt, und einen Resonator aufweist, der ausgebildet ist, um ein Geräusch zu verringern, das durch die Resonanz in den rohrförmigen Räumen erzeugt wird, die durch die Umfangsrille und eine Straßendecke definiert werden, wobei der Resonator eine Abzweigrille, die von der Umfangsrille abzweigt, und eine Luftkammer aufweist, die mit der Abzweigrille verbunden ist, und einen Querschnitt senkrecht zu der Richtung, in der er sich erstreckt, aufweist, der größer ist als der der Abzweigrille, **dadurch gekennzeichnet, dass**

ein Abschnitt $l_1$ mit einem minimalen Querschnitt $S_{min}$ der Abzweigrille von einer Öffnung zur Umfangsrille $l_1/L<1/\pi$ und $l_2/L = (l-l_1)/L<1/\pi$ erfiillt, worin sind: l eine Länge der Rille des Resonators; L eine Länge der Umfangsrille innerhalb einer Reifenaufstandsfläche; $S_{min}$ ein minimaler Abschnitt des Querschnittes der Abzweigrille; und $S_{max}$ ein maximaler Abschnitt des Querschnittes der Luftkammer, und wobei eine Beziehung zwischen l/L und $S_{min}/S_{max}$, um eine Form des Resonators zu ermitteln, die folgenden Gleichungen erfüllt:

$$\frac{S_{min}}{S_{max}} \leq \frac{\pi^2}{2(0,75)^2}\left(\frac{l}{L}\right)^2$$

und

$$\frac{S_{min}}{S_{max}} \geq \frac{\pi^2}{2(1,25)^2}\left\{\left(\frac{l}{L}\right)^2 - \frac{2}{\pi^2}\right\}$$

## Revendications

1. Procédé de conception d'un résonateur d'un bandage pneumatique, comportant au moins une rainure circonférentielle s'étendant dans une direction circonférentielle du bandage pneumatique sur une bande de roulement, le résonateur étant destiné à réduire un bruit produit par la résonance dans des espaces tubulaires définis par la rainure circonférentielle et la surface d'une route, le résonateur comportant une rainure de dérivation dérivée de la rainure circonférentielle, et une chambre à air communiquant avec la rainure de dérivation et ayant une section transversale perpendiculaire à sa direction d'extension, supérieure à celle de la rainure de dérivation, **caractérisé en ce qu'**une partie $l_1$ d'une section transversale minimale $S_{min}$ de la rainure de dérivation, d'une ouverture vers la rainure circonférentielle, satisfait les relations de $l_1/L < 1/\pi$ et $l_2/L = (l-l_1)/L < 1/\pi$, 1 représentant une longueur de la rainure du résonateur, L représentant une longueur de la rainure circonférentielle dans une pièce de contact, $S_{min}$ représentant une partie minimale de la section transversale de la rainure de dérivation, et $S_{max}$ représentant une partie maximale de la section transversale de la chambre à air, et une relation entre l/L et $S_{min}/S_{max}$, pour déterminer une forme du résonateur satisfaisant les équations ci-dessous :

$$\frac{S_{min}}{S_{max}} \leq \frac{\pi^2}{2(0,75)^2}\left(\frac{l}{L}\right)^2$$

et

$$\frac{S_{min}}{S_{max}} \geq \frac{\pi^2}{2(1,25)^2}\left\{\left(\frac{l}{L}\right)^2 - \frac{2}{\pi^2}\right\}$$

2. Bandage pneumatique, comportant au moins une rainure circonférentielle s'étendant dans une direction circonférentielle du bandage pneumatique sur une bande de roulement, et un résonateur, destiné à réduire un bruit produit par la résonance dans des espaces tubulaires définis par la rainure circonférentielle et la surface d'une route, le résonateur comportant une rainure de dérivation dérivée de la rainure circonférentielle, et une chambre à air communiquant avec la rainure de dérivation et ayant une section transversale perpendiculaire à sa direction d'extension à celle de la rainure de dérivation, **caractérisé en ce que** :

une partie $l_1$ d'une section transversale minimale $S_{min}$ de la rainure de dérivation, d'une ouverture vers la rainure circonférentielle, satisfait les relations de $l_1/L < 1/\pi$ et $l_2/L = (l-l_1)/L < l/\pi$, 1 représentant une longueur de la rainure du résonateur, L représentant une longueur de la rainure circonférentielle dans une pièce de contact, $S_{min}$ représentant une partie minimale de la section transversale de la rainure de dérivation, et $S_{max}$ représentant une partie maximale de la section transversale de la chambre à air, et une relation entre l/L et $S_{min}/S_{max}$, pour déterminer une forme du résonateur satisfaisant les équations ci-dessous :

$$\frac{S_{min}}{S_{max}} \leq \frac{\pi^2}{2(0,75)^2}\left(\frac{l}{L}\right)^2$$

et

$$\frac{S_{min}}{S_{max}} \geq \frac{\pi^2}{2(1,25)^2}\left\{\left(\frac{l}{L}\right)^2 - \frac{2}{\pi^2}\right\}$$

# FIG. 1

5

L

# FIG. 2

(a)

5    1    4

A
A'

(b)

1

CROSS SECTIONAL
VIEW ALONG LINE A-A'

# FIG. 3

# FIG. 4

# FIG. 5

(a)

(b)

(c)

CROSS SECTIONAL
VIEW ALONG LINE A-A'

CROSS SECTIONAL
VIEW ALONG LINE B-B'

# FIG. 6

# FIG. 7

# FIG. 8

(a)

(b)

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004103737 A
- WO 2007114430 A
- JP 2008179289 A
- JP 2007237751 A
- JP 2007237752 A